# FASCICULE DE BREVET EUROPEEN

(11) **EP 4 071 962 B1**
(45) Date de publication et mention de la délivrance du brevet: **29.11.2023**
(21) Numéro de dépôt: 22163459.5
(22) Date de dépôt: 22.03.2022
(51) Int. Cl.: H02J 7/00, H02J 7/36, H02M 3/07

(54) **DISPOSITIF DE CONVERSION DC-DC A BASE DE BATTERIES**
GLEICHSPANNUNGSWANDLER AUF BATTERIEBASIS
DEVICE FOR DC-DC CONVERSION USING BATTERIES

(30) Priorité: 09.04.2021 FR 2103649
(43) Date de publication de la demande: 12.10.2022
(73) Titulaire: Commissariat à l'énergie atomique et aux énergies alternatives, 75015 Paris (FR); Institut National des Sciences Appliquées de Lyon, 69600 Villeurbanne (FR); Centre national de la recherche scientifique, 75016 Paris (FR); Université Claude Bernard Lyon 1, 69100 Villeurbanne (FR); Ecole Centrale de Lyon, 69130 Ecully (FR)
(72) Inventeur: PILLONNET, Gaël, 38054 GRENOBLE Cedex 09 (FR); ALLARD, Bruno, 69100 VILLEURBANNE (FR); BERLITZ, Carlos-Augusto, 38054 GRENOBLE Cedex 09 (FR); OUKASSI, Sami, 38054 GRENOBLE Cedex 09 (FR)
(74) Mandataire: Atout PI Laplace

(56) Documents cités:
- WO-A1-2007/141722
- US-A1- 2008 054 327
- US-A1- 2010 253 154

## Description

### Champ d'application

La présente invention concerne le domaine des convertisseurs de tensions continues DC-DC à base de batteries et plus particulièrement les batteries d'accumulateurs à électrolyte solide rechargeables et intégrables dans un circuit intégré sur un substrat semiconducteur. Plus spécifiquement, le fonctionnement du convertisseur de tensions continues selon l'invention est basé sur un arrangement de phases au cours desquelles sont connectées en série une ou plusieurs batteries, afin de former un cycle présentant un nombre de critères.

### Problème soulevé

La conversion d'une tension continue d'entrée Vᵢₙ en une autre tension continue de sortie Vₒᵤₜ est une fonction de base en électronique. Si le rapport de conversion Vₒᵤₜ/Vᵢₙ est supérieur à 1 on parle d'un convertisseur élévateur. Si le rapport de conversion Vₒᵤₜ/Vᵢₙ est inférieur à 1 on parle d'un convertisseur abaisseur. Lorsque la tension d'entrée et la tension de sortie sont significativement différentes, cette conversion s'effectue à base de convertisseurs dits à découpage.

Un convertisseur à découpage intègre au moins un élément de stockage d'énergie intermédiaire comme une inductance ou une capacité. L'élément de stockage d'énergie est relié par N configurations de connexion possibles à l'entrée et la sortie via une cellule de commutation pendant un cycle prédéfini. Chaque élément de stockage d'énergie présente deux bornes, positive et négative.

On entend par « phase » une période temporelle correspondant à une configuration de connexion, choisie parmi les configurations possibles. Pendant chaque phase, une partie des éléments de stockages d'énergie et éventuellement du générateur de la tension d'entrée sont montés en série selon l'activation de chacune des cellules de commutation. On entend par « cycle » une séquence d'enchainement répétitif et prédéfini des phases d'une façon périodique.

L'invention se propose de résoudre un problème technique dans ce domaine consistant à concevoir des convertisseurs de tension continue basés sur des batteries à électrolyte solide permettant une meilleure intégrabilité du dispositif de conversion. Le fonctionnement du convertisseur de tension selon l'invention est organisé selon des cycles présentant des caractéristiques spécifiques permettant d'augmenter la robustesse du convertisseur et d'améliorer son rendement énergétique.

En effet, dans un convertisseur de tension à découpage, on associe pour chaque élément de stockage d'énergie une cellule de commutation pour connecter les deux bornes dudit élément selon la configuration de la phase en cours. Un circuit de contrôle commande les cellules de commutation afin de garantir le bon rapport entre la tension d'entrée et la tension de sortie. Les différents paramètres tels que la fréquence de travail du convertisseur, la durée des différentes phases, la conductivité des commutateurs, permettent de définir la loi de contrôle du système. La définition des cycles et des phases en combinaison avec ces différents paramètres technologiques permet de garantir une efficacité énergétique élevée avec un rapport entre la puissance d'entrée et la puissance de sortie P_{OUT}/P_{IN} proche de l'unité.

La surface et le volume du convertisseur dépend souvent de la taille des éléments de stockage d'énergie. Le rapport entre le volume d'un éléments de stockage d'énergie et la densité de stockage d'énergie est plus déterminant pour les convertisseurs à basse puissance. Il est donc primordial d'adapter le choix des composants qui forment des éléments de stockage d'énergie selon les spécifications du convertisseur. On distingue deux grandes familles de convertisseur à découpage : les convertisseurs inductifs et les convertisseurs capacitifs. La densité de stockage de l'énergie dans les éléments de stockage est déterminée par le type des composants choisis et leur dimensionnement. Dans le cas des convertisseurs capacitifs, l'énergie est stockée et échangée sous forme de charges électrostatiques ; dans le cas des convertisseurs inductifs l'énergie est stockée et échangée sous forme de flux magnétique.

Les convertisseurs inductifs sont basés sur des éléments de stockage d'énergie réalisé avec des composants inductifs. L'inconvénient des inductances consiste en la difficulté de les intégrer dans des circuits intégrés microélectroniques et dans les systèmes sur puces comprenant les cellules de commutation et les circuits de contrôle du fonctionnement du convertisseur. De plus, la miniaturisation des composants intégrés accentue encore plus l'effet de la réduction des volumes des composants de stockage sur leur densité volumique d'énergie. On en déduit que les convertisseurs DC-DC capacitifs sont plus adaptés à des applications de systèmes embarqués puisque les éléments de stockages d'énergie capacitifs sont intégrables dans les systèmes sur puces. Cela offre l'avantage d'une intégrabilité de l'ensemble des composants du convertisseur dans un seul circuit intégré permettant de réduire la surface et le volume du dispositif et de limiter les coûts d'intégration et de fabrication du dispositif de conversion de tension continue. De plus, l'émergence des éléments capacitifs volumiques a renforcé la préférence des éléments de stockage d'énergie capacitif par rapport aux éléments inductifs pour la réalisation des convertisseurs intégrés.

Cependant, la densité énergétique des éléments capacitifs par unité de volume reste limitée, notamment car les charges sont stockées à la surface des électrodes mises en regard. Le stockage est dit « surfacique ». Des effets de volume ont été démontrés, mais restent toujours insuffisants.

Afin d'augmenter la densité volumique d'énergie des éléments de stockage, (et donc réduire la taille du convertisseur), les batteries rechargeables présentent une solution potentielle pour remplacer les éléments capacitifs électrostatiques dans les convertisseurs. D'une façon générale, les réactions électro-chimiques volumiques, dans l'électrolyte entre les deux électrodes, confèrent aux batteries des densités volumiques d'énergie très supérieures aux éléments capacitifs électrostatiques. Cependant, les batteries sont difficilement intégrables et perdent souvent leurs avantages de densité énergétiques lors de leur miniaturisation dans l'optique d'une intégration sur puces.

Les batteries à électrolyte solide (ou batterie tout solide, ou micro-batteries) présentent une nouvelle technologie de batterie en développement. Cette technologie est compatible avec un procédé de fabrication microélectronique. Ce type de micro-batterie présente des caractéristiques physiques de densité volumique, d'épaisseur et de taille unitaire permettant de trouver un compromis entre miniaturisation et efficacité énergétique.

Le problème technique qui se pose avec l'utilisation des micro-batteries consiste en ce qu'ils ne présentent les performances voulues que lorsqu'ils sont soumis à des tensions de fonctionnement appartenant à une plage de tension de polarisation étroite avec une amplitude de variation comprise entre 100mV et 300mV. On cherche alors à minimiser les variations de la tension aux bornes des micro-batteries du convertisseur de tension de manière à ce que la tension de polarisation de chaque micro-batterie soit maitrisée autour du point de fonctionnement optimal en terme de densité d'énergie.

### Art antérieur/ Restrictions de l'état de l'art

La demande de brevet américain US8610404B2 propose l'utilisation d'une micro-batterie autour d'un étage de commutation pour effectuer une conversion d'une tension continue d'entrée en une tension continue de sortie. L'inconvénient de la solution proposée par le brevet américain précité consiste en ce que la tension optimale de polarisation des micro-batteries où la densité d'énergie est maximum est choisie à peu près égale à la tension de sortie. Ainsi, le choix des micro-batteries compatible avec le convertisseur selon US8610404B2 est imposé par la valeur de la tension de sortie, ce qui limite les choix de conception du convertisseur DC-DC. De plus, dans le convertisseur proposé par la solution de l'état de l'art, l'équilibre de charge n'est pas respecté à la fin de chaque cycle et le brevet propose un schéma de rééquilibrage des charges d'une façon périodique ce qui rajoute une complexité à la solution proposée.

La publication de « F. Z. Peng et al." intitulée "A Magnetic-less DC-DC Converter for Dual Voltage Automotive Systems," décrit un schéma commun de deux batteries connectées par une cellule de commutation. Les deux batteries servent de stockage d'énergie quasi permanent. Si l'une des batteries est épuisée ou si elle ne fournit pas le courant nécessaire, le circuit vient connecter les batteries entre elles. L'inconvénient de la solution proposée par la publication consiste en l'absence d'équilibre de charge à la fin chaque cycle. De plus, la solution de « F. Z. Peng et al." ne propose pas un agencement particulier des batteries monté en série pour s'adapter aux tensions d'entrée et de sortie du convertisseur.

La publication "Reconfigurable Battery Systems: A Survey on Hardware Architecture and Research Challenges," de "S. Muhammad, et al" décrit une topologie de connexion de batteries reconfigurable gérée par un système de commutation et une unité de contrôle. Le mode de fonctionnement du contrôle de cette cellule de commutation est régi par des règles différentes où on ne traite pas la notion d'échange de petites quantités de charge en continu entre les différents éléments de stockage d'énergie.

Le document WO 2007/141722 A1 décrit également un dispositif de conversion DC-DC à base de batteries.

### Réponse au problème et apport de la solution

Pour pallier les limitations des solutions existantes en ce qui concerne la réduction de la surface des convertisseurs à découpage de tensions continues intégrées dans un système sur puce, l'augmentation de la densité volumique d'énergie et la robustesse technique du dispositif, l'invention propose d'organiser le fonctionnement d'un convertisseur de tension continu réalisé avec une pluralité de micro-batteries à électrolyte solide selon un cycle particulier présentant les caractéristiques suivantes :
- Une polarisation maitrisée : le maintien de la tension de polarisation aux bornes de chaque micro-batterie autour d'un point de fonctionnement correspondant à un palier de tension lors de la variation de la quantité de charge échangée dans l'élément de stockage d'énergie pendant tout le cycle.
- Un cycle fermé : la quantité de charge stockée dans chaque élément de stockage d'énergie au début d'un cycle est égale à la quantité de charge à la fin du cycle.
- La quantité de charge dans l'élément de stockage d'énergie échangée lors du passage d'une phase à la phase suivante est très inférieure à la quantité de charge globale présente dans l'élément de stockage d'énergie.
- Les noeuds où la tension de sortie est mesurée sont toujours connectés à au moins un élément de stockage d'énergie pour chaque phase du cycle.

La polarisation maitrisée permet d'utiliser la batterie au point de fonctionnement optimal en termes de densité d'énergie. L'équilibre des charges du cycle fermé permet d'obtenir un fonctionnement stable sans nécessité de phases supplémentaires de recharge et de décharge affectant l'efficacité globale du convertisseur et sa fiabilité. La faible variation relative de la quantité de charges dans l'élément de stockage lors des échanges pendant le cycle de fonctionnement permet de réduire au minimum la variation de tension aux bornes des batteries et donc de minimiser les pertes par partage de charges. Cela permet d'augmenter le rendement énergétique du convertisseur de tension à découpage. La faible variation relative de la quantité de charges dans l'élément de stockage permet en outre d'augmenter la durée des cycles car la profondeur de décharge dans les éléments de stockage est réduite ce qui limite l'épuisement de l'élément de stockage. La connexion permanente des noeuds de la tension de sortie à au moins un élément de stockage d'énergie permet au concepteur de simplifier l'implémentation du convertisseur en se passant de la capacité de découplage usuellement connectée à la sortie dans les solutions de l'état de l'art.

### Résumé /Revendications

L'invention a pour objet un dispositif de conversion d'une tension continue d'entrée en une tension continue de sortie ayant une valeur prédéterminée comprenant :
o Un ensemble de composants élémentaires comprenant :
   - Une source de tension pour générer la tension continue d'entrée ;
   - deux nœuds de sortie;
   - une pluralité d'éléments de stockage d'énergie , chacun étant constitué d'une batterie ou d'une pluralité de batteries montées en série ou en parallèle,
∘ une matrice de commutation, configurée pour connecter les composants élémentaires entre eux selon un cycle périodique composé d'une pluralité de phases ; de manière à ce que pour chaque cycle:
Chaque phase est associée à une configuration de connexion différente choisie de manière que :
- dans chaque élément de stockage d'énergie, la quantité de charge au début du cycle est égale à la quantité de charge à la fin du cycle ;
- les deux noeuds de sortie présentent une différence de potentiel égale à la valeur prédéterminée de la tension continue de sortie pendant toutes les phases.

Selon un aspect particulier de l'invention, la tension aux bornes de chaque élément de stockage d'énergie est maintenue dans une plage de tension prédéterminée correspondant à un palier de tension lors de la variation de la quantité de charge dans l'élément de stockage d'énergie.

Selon un aspect particulier de l'invention, la durée de chaque phase est définie de manière à ce que la variation relative de la quantité de charge dans l'élément de stockage d'énergie lors du passage d'une phase à la phase suivante est inférieure à une valeur prédéterminée.

Selon un aspect particulier de l'invention, les noeuds de sortie sont toujours connectés à au moins un élément de stockage d'énergie pour chaque phase.

Selon un aspect particulier de l'invention, la matrice de commutation est configurée de manière à ce que pour chaque phase:
- pour chaque configuration choisie, un nombre de composants élémentaires sont montés en série entre eux ;
- et la tension de sortie est égale à la somme des tensions aux bornes des composants élémentaires montés en série.

Selon un aspect particulier de l'invention, la matrice de commutation comprend une pluralité de cellules de commutation élémentaires ; chaque cellule de commutation élémentaire étant associée à un composants élémentaires et comprenant au moins deux commutateurs commandés. Chaque composant élémentaire présente deux bornes ; et pour chaque composant élémentaire :
- la première borne est connectée via l'au moins un premier commutateur commandé à au moins une borne quelconque choisie parmi celles des autres composants élémentaires ou l'un quelconque des noeuds de sortie;
- la seconde borne est connectée via l'au moins un second commutateur commandé à au moins une borne quelconque choisie parmi celles des autres composants élémentaires ou l'un quelconque des noeuds de sortie.

Selon un aspect particulier de l'invention, les commutateurs commandés sont réalisés avec des transistors de type CMOS.

Selon un aspect particulier de l'invention, les batteries sont des batteries à électrolyte solide.

Selon un aspect particulier de l'invention, les batteries à électrolyte solide sont réalisées via un empilement de couches et comprenant :
- une électrode positive ;
- une électrode négative ;
- une couche d'électrolyte solide inorganique disposée entre l'électrode positive et l'électrode négative ;

Selon un aspect particulier de l'invention, les batteries à électrolyte solide sont des micro-batteries de type lithium-ion.

Selon un aspect particulier de l'invention, la variation de la tension aux bornes de chaque élément de stockage d'énergie est inférieure à 10mV.

Selon un aspect particulier de l'invention, le cycle présente une fréquence comprise entre 1Hz et 10kHz.

Selon un aspect particulier de l'invention, le dispositif de conversion comprend en outre un circuit de contrôle de polarisation configuré pour réinitialiser la tension aux bornes de chaque élément de stockage d'énergie à une valeur correspondant à un optimum de densité énergétique après un nombre prédéterminé de répétition dudit cycle.

### Brève description des dessins

D'autres caractéristiques et avantages de la présente invention apparaîtront mieux à la lecture de la description qui suit en relation aux dessins annexés suivants.
[Fig. 1a] la figure 1a illustre un schéma électrique et le fonctionnement d'un exemple d'un convertisseur à découpage de tension continu basé sur un élément de stockage capacitif selon l'état de l'art.
[Fig. 1b] la figure 1b illustre une première courbe P1 caractéristique de variation de la tension aux bornes d'un condensateur en fonction de la quantité de charge stockée et une seconde courbe P2 caractéristique de variation de la tension aux bornes d'une batterie en fonction de la quantité de charge stockée.
[Fig. 2a] la figure 2a illustre l'architecture générale d'un convertisseur à découpage d'une tension continue selon l'invention réalisée avec des batteries à électrolyte solide.
[Fig. 2b] la figure 2b illustre l'architecture générale d'une cellule de commutation associée à une batterie du convertisseur selon l'invention.
[Fig. 3a] la figure 3a illustre les différentes phases d'un exemple d'implémentation d'un convertisseur à découpage selon l'invention.
[Fig. 3b] La figure 3b illustre les cellules de commutations utilisées avec l'exemple de la figure 3a.
[Fig. 4] La figure 4 illustre un exemple d'une batterie à électrolyte solide compatible avec la réalisation du convertisseur selon l'invention dans un circuit intégré.
[Fig. 5] La figure 5 illustre plusieurs exemples de matrices de commande de convertisseur selon l'invention réalisables avec des micro-batteries intégrables dans des circuits intégrés.
[Fig. 6] La figure 6 illustre un procédé permettant d'obtenir des combinaisons d'implémentation selon l'invention pour une tension d'entrée Vᵢₙ donnée, une tension de sortie Vₒᵤₜ donnée, et une pluralité de groupes de batteries.

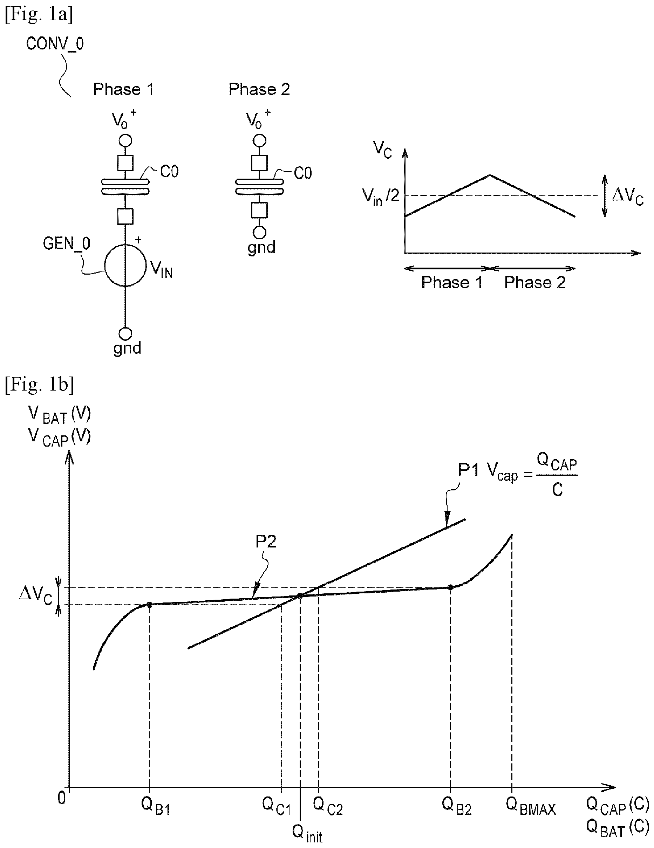

La figure 1a illustre un schéma électrique et le fonctionnement d'un exemple d'un convertisseur CONV_0 à découpage de tension continu basé sur un élément de stockage capacitif CAP_0 selon l'état de l'art.

Le convertisseur à découpage CONV_0 comprend une source de tension GEN_0 qui fournit la tension d'entrée continue Vᵢₙ, deux noeuds de sortie Vₒ⁺ et Vₒ⁻entre lesquels la tension de sortie Vₒᵤₜ= Vₒ⁺ -Vₒ⁻ est mesurée et un élément capacitif C0 pour stocker l'énergie sous forme de charges électrostatiques. Le convertisseur à découpage CONV_0 fonctionne selon un cycle périodique composé de deux phases : phase 1 et phase 2. Chaque phase correspond à une configuration de connexion choisie entre les différents composants du convertisseur CONV_0. On connecte généralement Vₒ⁻ à la masse électrique jouant le rôle de référence électrique.

Pendant la phase 1, l'élément capacitif C0 est mis en série avec la source de tension GEN_0 , la borne négative de la source de tension GEN_0 est connectée à la masse électrique. La tension de sortie est ainsi mesurée aux bornes de la série de la source de tension GEN_0 et de l'élément capacitif C0. Initialement, l'élément capacitif est chargé pour avoir un point de polarisation égal à la moitié de la tension d'entrée Vᵢₙ. Pendant la phase 1, la capacité C0 va recevoir une quantité de charges (charge) fournies par la source de tension d'entrée GEN_0, d'où la variation croissante de la tension aux bornes de l'élément capacitif pendant la phase 1. La tension aux bornes de l'élément capacitif C0 varie d'une valeur légèrement inférieure à Vᵢₙ/2 à une valeur légèrement supérieure..

Pendant la phase 2, l'élément capacitif C0 est déconnecté de la source de tension d'entrée. La tension de sortie est mesurée aux bornes de l'élément capacitif C0. La capacité C0, étant connectée à la masse électrique va fournir une quantité de charges (décharge), d'où la variation décroissante de la tension aux bornes de l'élément capacitif pendant la phase 2. La tension aux bornes de l'élément capacitif C0 varie d'une valeur légèrement supérieure à Vᵢₙ/2 à une valeur légèrement inférieure.

Nous avons décrit un cycle de deux phases qui se répètent d'une façon identiques de façon à avoir une tension moyenne aux bornes de l'élément capacitif C0 égale à Vᵢₙ/2. Les différentes configurations de connexion entre C0 et GEN_0 correspondant à chacune des phases sont réalisées avec des commutateurs commandés non représentés dans la figure 1a.

On déduit de ce qui précède que les éléments capacitifs dans un convertisseur de tension continu à découpage observent des variations périodiques de tension à leurs bornes pendant les cycles de fonctionnement du convertisseur. On note l'amplitude de ces variations ΔV_{c}.

La figure 1b illustre une première courbe P1 caractéristique de variation de la tension V_{CAP} aux bornes d'un condensateur en fonction de la quantité de charge stocké Q_{CAP}. La figure 1b illustre en outre une seconde courbe P2 caractéristique de variation de la tension V_{BAT} aux bornes d'une batterie en fonction de la quantité de charge stockée Q_{BAT}.

Les deux types d'éléments capacitifs (condensateur et batterie) sont initialement chargés à une valeur initiale Qᵢₙᵢₜ fixant ainsi la tension de polarisation dudit élément. Dans un condensateur, la tension aux bornes de la capacité est proportionnelle à la charge stockée sur sa borne positive du condensateur. La décharge du condensateur induit alors une baisse de la quantité de charge ce qui provoque une réduction de la tension V_{CAP} aux bornes du condensateur. La pente de variation de la tension V_{CAP} selon la charge stockée Q_{CAP} est égale à l'inverse de la capacité électrique du condensateur. Lorsque le condensateur échange des charges avec les autres éléments du convertisseur, la valeur de la charge stockée Q_{CAP} varie et la tension V_{CAP} varie à son tour autour du point de fonctionnement avec une amplitude de variation ΔV_{c}.

Dans les batteries, la relation entre la tension aux bornes de la batterie V_{BAT} et la quantité de charge stockée dans la batterie Q_{BAT} n'est pas une relation linéaire. La courbe P2 présente trois régions de fonctionnement:
- une première région avec une forte pente croissante lorsque la quantité de charge Q_{BAT} est entre 0 et une valeur limite Q_{B1}
- une deuxième région de palier en tension dans une plage de variation de la charge délimitée par les deux valeurs limites Q_{B1} et Q_{B2}.
- une troisième région avec une forte pente croissante lorsque la quantité de charge Q_{BAT} est entre la valeur limite Q_{B2} et la valeur de la charge maximale Q_{BMAX}.

D'un point de vue pratique, il n'y a pas de corrélation directe appréciable entre la tension V_{BAT} aux bornes d'une batterie et la quantité de charge Q_{BAT}. En effet, dans la deuxième région de palier, la charge/décharge de la batterie en tension a une pente très faible traduisant une faible variation de la tension ΔV_{c} pour une large plage de variation de charges délimitée par les deux valeurs limites Q_{B1} et Q_{B2}.

Pour obtenir la même pente avec un condensateur, il faudrait une surface de condensateur plus grande supérieure à celle d'une batterie de 1000 à 10000 fois. La faible pente permet de limiter l'amplitude de la variation de la tension ΔV_{c} aux bornes de l'élément capacitif. La réduction de ΔV_{c} augmente le rendement énergétique de l'ensemble du convertisseur. D'où l'intérêt de l'utilisation des batteries pour réaliser le convertisseur à découpage de tension continue.

Le convertisseur selon l'invention vise l'exploitation de cette faible pente pour améliorer, à surface égale, le rendement du convertisseur DC-DC en remplaçant les capacités flottantes intégrées dans le convertisseur par des batteries, en suivant un cycle particulier. Le positionnement du point de fonctionnement dans la région de faible pente permet en outre de diminuer la fréquence de découpage et donc réduire les pertes par commutation et les perturbations électromagnétiques induites par une haute fréquence de découpage et ses harmoniques.

D'une façon générale, le lien entre la pente de la courbe charge/décharge et le rendement énergétique d'un élément capacitif est défini par le phénomène de « perte par redistribution de charges » (pour *charge sharing loss* en Anglais). En effet, lors de la connexion d'une source de tension avec un élément de stockage capacitif, le rendement énergétique de charge (ou de décharge) dépend de l'adaptation initiale entre la tension de source et la tension aux bornes de l'élément capacitif.

Dans l'exemple du convertisseur à condensateur commuté de la figure 1a, le condensateur se charge partiellement au cours de la première phase via la source de tension GEN_0, puis se décharge partiellement aux bornes de la sortie. Les quantités de charges échangées ΔQ_{CAP} est directement proportionnelle à la variation de tension ΔV_{c}. Cette variation de tension ΔV_{C} induit un phénomène de « perte par redistribution de charges » (*charge sharing loss* en anglais) dû aux impédances parasites dans les connexions entre les différents composants élémentaires qui échangent les charges électriques, réduisant ainsi le rendement énergétique global du convertisseur. En effet, les opérations de charge/décharge de l'élément capacitif entrainent des appels de courant traversant les commutateurs, avec une intensité proportionnelle à ΔV_{C}.

Il est envisageable de réduire l'amplitude des variations de tension ΔV_{C} en augmentant la valeur de la capacité de condensateur. Cette solution présente l'inconvénient de l'augmentation considérable de la surface du circuit intégré qui devient incompatible avec des systèmes embarqués dans des appareils portables. Nous rappelons que la valeur de la capacité électrique d'un condensateur est proportionnelle à sa surface et/ou son volume.

Il est envisageable de réduire l'amplitude des variations de tension ΔV_{C} en augmentant la fréquence des cycles (et donc des phases). Cette solution présente l'inconvénient de l'augmentation des pertes d'énergie dans les commutateurs sollicités à très haute fréquence.

Alors, en comparant les courbes P1 et P2 on observe l'intérêt de remplacer les condensateurs par des batteries pour la réalisation des éléments de stockage d'énergie dans un convertisseur avec des variations de tension ΔV_{C} réduite. En effet, en utilisant des batteries à la place des condensateurs, ΔV_{C} sera grandement diminué pour la même quantité de charge échangée (Q_{C1}-Q_{C2}) à surface égale. Autrement, à ΔV_{C} constant entre les deux solutions, la quantité de charge sera grandement supérieure (Q_{C1}-Q_{C2} pour le condensateur et Q_{B1}-Q_{B2} pour la batterie) . Cela permet à l'élément capacitif d'augmenter ainsi la capacité du convertisseur à fournir plus de quantités de charges sous le même régime de pertes.

Alternativement, le positionnement du point de polarisation dans le plateau de tension peut être utilisé pour réduire la fréquence de découpage du convertisseur afin de limiter les interférences électromagnétiques du convertisseur avec d'autres circuits voisins implémentés sur la même puce.

Cependant, la tension de polarisation aux bornes de la batterie doit être maintenue dans la plage correspondant à la deuxième région associée au palier de tension en fonction de la charge. La valeur de la tension est imposée dans le convertisseur par les configurations de connexion entre les éléments du convertisseur de chaque phase, la durée des phases (et donc la fréquence de fonctionnement) mais aussi de la quantité de charges stockées dans chacune des batteries du convertisseur.

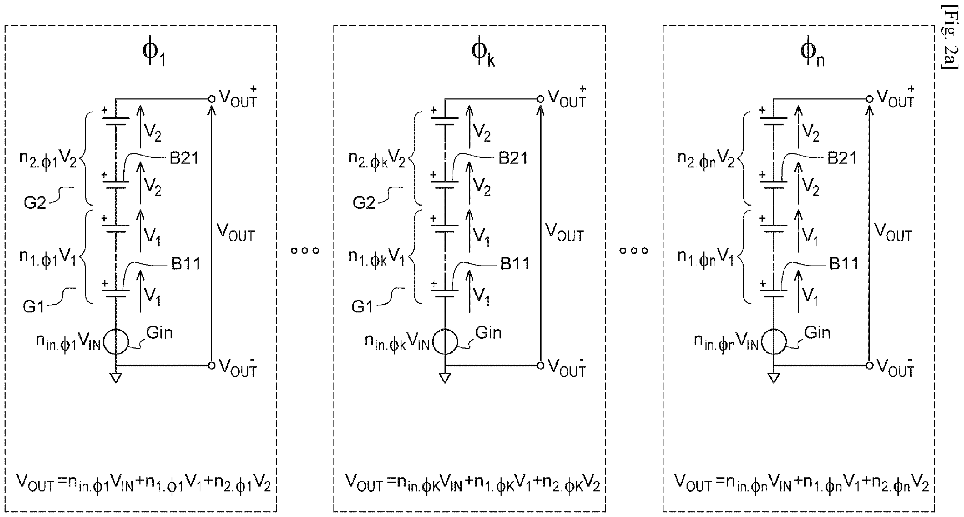

La figure 2a illustre l'architecture générale d'un convertisseur à découpage d'une tension continue selon l'invention réalisée avec des batteries à électrolyte solide.

On représente ici les différentes phases de fonctionnement d'un dispositif de conversion d'une tension continue d'entrée Vᵢₙ en une tension continue de sortie Vₒᵤₜ. avec une valeur prédéterminée selon le rapport de conversion choisi. Le dispositif de conversion comprend un ensemble de composants élémentaires comprenant : une source de tension Gᵢₙ pour générer la tension continue d'entrée Vᵢₙ ; deux noeuds de sortie Vₒᵤₜ₊ et Vₒᵤₜ₋ aux bornes desquels la tension continue de sortie est mesurée et une pluralité d'éléments de stockage d'énergie B_{i,j} qui correspond à la j^{ème} batterie du i^{ème} groupe de batteries. Un groupe de batterie noté Gᵢ étant défini par une tension optimale de polarisation V; commune à l'ensemble des batteries dudit groupe ; avec i et j deux entiers naturels strictement positifs

Le dispositif de conversion comprend en outre une matrice de commutation, configurée pour connecter les composants élémentaires entre eux selon un cycle périodique composé d'une pluralité de phases. Chaque phase est associée à une configuration de connexion différente.

Pendant chaque phase de commutation, la configuration de connexion est choisie de manière que :
- dans chaque élément de stockage d'énergie, la quantité de charge au début du cycle soit égale à la quantité de charge à la fin du cycle ;
- les deux noeuds de sortie Vₒᵤₜ₊ ,Vₒᵤₜ₋ présentent une différence de potentiel toujours égale à la valeur prédéterminée de la tension continue de sortie (Vₒᵤₜ) pendant toutes les phases.

Il est possible de réaliser les éléments de stockage d'énergie tel que chacun est constituée d'une seule batterie ou d'une pluralité de batteries montées en série ou en parallèle selon la capacité et la tension de polarisation optimale voulue lors de la conception de l'élément stockage d'énergie.

L'invention propose un arrangement de phases spécifique où une partie de l'ensemble des composants élémentaires (batteries, source de tension d'entrée) sont connectés en série entre eux et la tension de sortie est mesurée entre les bornes de la série obtenue de composants élémentaires pour chaque phase. Un cas général de la topologie permettant la construction de ces phases où les composants élémentaires comprennent la source de la tension d'entrée Vᵢₙ et comprennent un nombre nₛ de groupes G; (avec nₛ≥2).Chaque groupe de batteries peut avoir un nombre différent de batteries, noté Nᵢ. Chaque groupe de batteries est défini par la tension de polarisation V; optimale commune aux Nᵢ batteries qui la constituent tel que Vᵢ correspond à la région palier de fonctionnement. Les batteries peuvent être connectées soit à la source de la tension d'entrée, soit aux noeuds de sortie, soit à n'importe quelle autre borne d'une autre batterie appartenant au même groupe ou à un groupe différent. On notera Bᵢⱼ la j^{ème} batterie du i^{ème} groupe de batteries, le groupe étant défini par une tension optimale de polarisation Vᵢ commune. Le premier objectif de l'invention est de maintenir la condition suivante : la mise en séries de batteries (et d'éventuellement de la source de la tension d'entrée Vᵢₙ) permet d'atteindre la valeur de la tension de sortie prédéfinie à chaque phase grâce à une combinaison linéaire de mise en série des batteries Bᵢⱼ

Des moyens de contrôle génèrent des signaux de contrôle destinés à gérer le fonctionnement de la matrice de commutation et donc choisir la configuration de connexion entre les différents composants élémentaires pour chaque phase. Pour chaque phase, le contrôle autorise un agencement de mise en série de batteries, en connectant ou pas la tension d'entrée V_{IN}, de manière que la somme des tensions de la mise en série d'une partie des batteries et éventuellement la source de tension d'entrée soit égale à la valeur objectif de la tension de sortie V_{OUT}.

Les moyens de contrôles sont généralement programmés préalablement pour gérer une séquence prédéterminées des signaux de contrôles permettant d'obtenir les configurations de connexion entre les différents composants élémentaires prévus pour chaque phase selon l'invention.

Pendant une phase quelconque θₖ d'ordre k (avec k un entier naturel), on respecte cette égalité : Vₒᵤₜ = *n*_{*in,*Ø}*ₖVᵢₙ* + *n*_{1,Ø}*ₖV*₁ + *n*_{2,Ø}*ₖV*₂
avec *n*_{*in*,Ø*k*}=1/0/-1,
*n*_{1,Ø*k*} le nombre des batteries mises en série pendant la phase θₖ appartenant au premier groupe,
V₁ la tension de polarisation optimale des batteries du premier groupe,
*n*_{2,Ø*k*} le nombre des batteries mis en série pendant la phase θₖ appartenant au deuxième groupe,
V₂ la tension de polarisation optimale des batteries du deuxième groupe.
Nous nous sommes limité à représenter deux groupes de batteries par souci de simplification mais il est envisageable de choisir un nombre de groupe supérieur pour augmenter les possibilités de combinaisons linéaires permettant d'obtenir la valeur définie de la tension de sortie V_{OUT}.

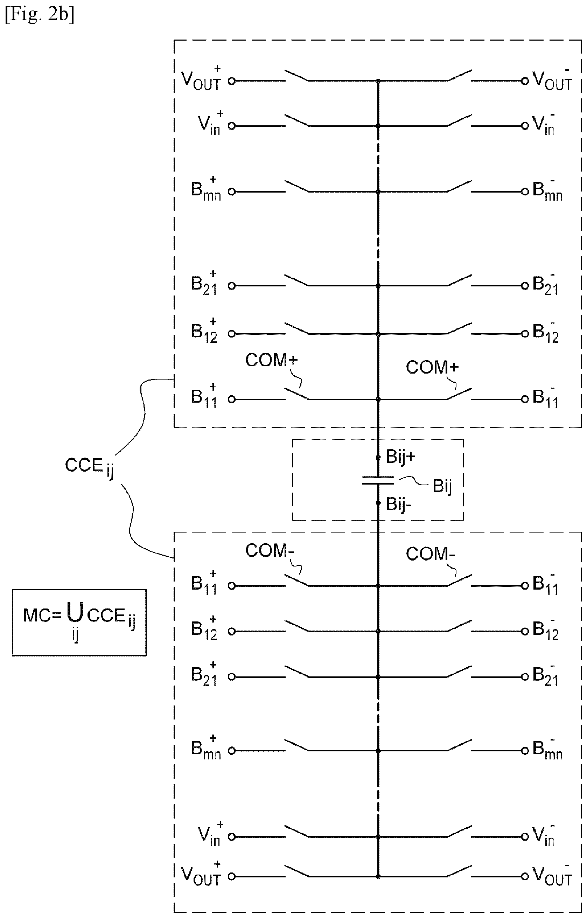

La figure 2b, illustre l'architecture générale d'une cellule de commutation associée à une batterie du convertisseur selon l'invention.

La matrice de commutation globale MC du convertisseur comprend une pluralité de cellules de commutation élémentaires CCEᵢⱼ. Chaque cellule de commutation élémentaire CCEᵢⱼ est associée à un composant élémentaire Bᵢⱼ et comprend au moins deux commutateurs commandés COM, et COM_{-.} . Chaque composant élémentaire présente deux bornes, une positive et une négative. Pour une batterie Bᵢⱼon note la borne positive Bᵢⱼ⁺ et la borne négative Bᵢⱼ⁻. Pour chaque composant élémentaire Bᵢⱼ (ou la source de tension d'entrée GEN) :
- La première borne Bᵢⱼ⁺ est connectée via l'au moins premier commutateur COM⁺ commandé à au moins une borne quelconque parmi Bₘₙ⁺ ,Bₘₙ⁻'Vᵢₙ⁺ ou Vᵢₙ⁻ choisie parmi celles des autres composants élémentaires ou l'un quelconque des noeuds de sortie V_{OUT}⁺ ou V_{OUT}⁻.
- La seconde borne Bᵢⱼ⁻ est connectée via l'au moins un premier commutateur COM⁺ commandé à au moins une borne quelconque parmi Bₘₙ⁺, Bₘₙ⁻ 'Vᵢₙ⁺ ou Vᵢₙ choisie parmi celles des autres composants élémentaires ou l'un quelconque des noeuds de sortie V_{OUT}⁺ ou V_{OUT}⁻.

Pendant une phase, un seul commutateur COM⁺ est activé pour la première borne Bᵢⱼ⁺ et un seul commutateur COM⁻ est activé pour la seconde borne Bᵢⱼ⁻ pour assurer un montage uniquement en série entre les différents composants élémentaires comme décrit précédemment.

D'une façon générale, le fonctionnement des cellules de commutation élémentaires CCEᵢⱼ est organisé pour obtenir des cycles de commutation présentant les caractéristiques suivantes :
a. Une polarisation maitrisée : le maintien de la tension de polarisation aux bornes de chaque micro-batterie autour d'un point de fonctionnement correspondant à un palier de tension lors de la variation de la quantité de charge dans l'élément de stockage d'énergie pendant tout le cycle.
b. Un cycle fermé : la quantité de charge dans chaque élément de stockage d'énergie au début d'un cycle est égale à la quantité de charge à la fin du cycle.
c. La quantité de charge dans l'élément de stockage d'énergie échangée lors du passage d'une phase à la phase suivante est très inférieure à la quantité de charge globale présente dans l'élément de stockage d'énergie.

La caractéristique (a) permet de faire travailler les batteries dans la région de fonctionnement correspondant à un palier de tension de manière à minimiser la variation de tension aux bornes des batteries tout en restant dans la zone optimale. Comme démontré précédemment, cela permet de maximiser le rendement énergétique du convertisseur en gardant des variations de tension ΔV_{C} réduite et en élargissant la quantité de charges « échangeable » (Q_{B1}-Q_{B2} ). Cette maitrise de point de polarisation résulte directement de l'arrangement spécifique pendant chaque phase du cycle permettant d'obtenir la valeur de tension de sortie voulue. Généralement, la tension de chacune des batteries est initialisée avant la mise en service du convertisseur à un niveau de charge stocké correspondant au palier tel que Q est centrée entre Q_{B1} et Q_{B2}. La combinaison des caractéristiques b) et c) permettent alors de s'assurer que chaque batterie Bᵢⱼ reste toujours dans la même région de fonctionnement puisque l'état de charge de chaque batterie est le même au début et à la fin de chaque cycle et puisque la quantité de charge échangée par rapport à l'état de charge de chaque batterie reste relativement basse (<1%).

L'équilibre des charges (b) permet quant à lui d'obtenir un fonctionnement stable sans nécessité de phases supplémentaire de recharge/décharge affectant l'efficacité globale du convertisseur et sa fiabilité.

La faible variation relative de la quantité de charges stockée (c) pendant une phase permet de réduire au minimum la variation de tension aux bornes des batteries et donc de minimiser les pertes « par redistribution de charges » et donc augmenter le rendement du convertisseur. Cela permet également une meilleure efficacité des réactions électrochimiques de lithiation et délithiation dans chaque batterie.

Dans un mode de réalisation préférentielle, les cycles et les phases sont choisis de manière à ce que les noeuds où la tension de sortie est mesurée sont toujours connectés à au moins un élément de stockage d'énergie pour chaque phase du cycle. Cette connexion permanente pendant tout le cycle permet de se passer d'une capacité de découplage généralement connectée à la sortie. Cela présente un avantage de réduction de la surface du circuit du dispositif convertisseur.

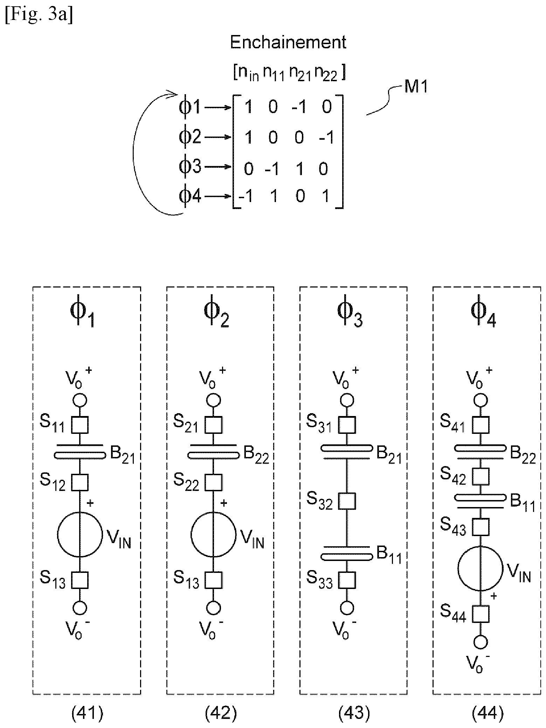

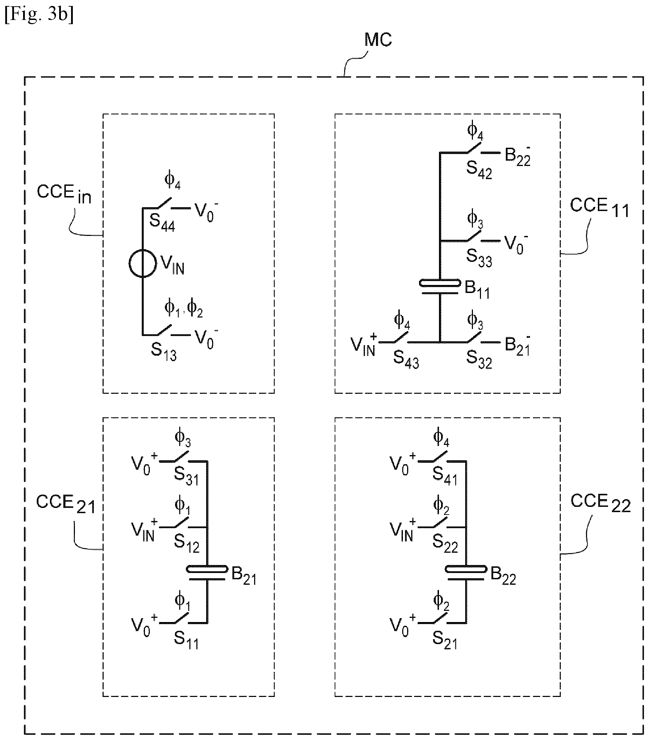

La figure 3a illustre les différentes phases d'un exemple d'implémentation d'un convertisseur à découpage selon l'invention. La figure 3b illustre les cellules de commutations utilisées avec l'exemple de la figure 3a.

Il s'agit d'un exemple de réalisation à titre illustratif et non limitatif. Le convertisseur est réalisé avec deux groupes de batteries sous des polarisations respectives de V₁=2V, V₂=3V afin de générer une tension de sortie V_{OUT}=1V à partir d'une tension d'entrée de V_{IN}=4V. Il s'agit alors d'un convertisseur de tension continue avec un rapport de conversion de tension égal à 1/4. Deux groupes de batteries sont utilisés : un premier groupe G₁(V₁)={B₁₁} composé d'une seule batterie B₁₁ sous une tension de polarisation optimale V₁=2V et un second groupe G₂(V₂)={B₂₁ B₂₂} composé de deux batteries B₂₁ B₂₂, chacune sous une tension de polarisation optimale V₂=3V.

Toutes les batteries sont initialement chargées de façon qu'elles soient polarisées à la tension de polarisation optimale associée. Ainsi à l'état initial, chaque batterie Bᵢⱼ stocke la quantité de charge Q_{ij,opt} centrée entre les valeurs Q_{B1} et Q_{B2} extraits de la courbe charge/décharge caractéristique de ladite batterie. Dans l'hypothèse d'une durée de phase égale pour tout le cycle, et pour une intensité de courant donnée, le choix d'une durée de phase suffisamment courte permet d'avoir une quantité de charge fournie par une batterie q très inférieure à la charge Q_{ij,opt} stockée dans chaque batterie Bᵢⱼ sous leurs points de polarisation V₁ ou V₂. Cela revient à augmenter la fréquence des phases qui composent le cycle mais cela est limité par les technologies des batteries où les porteurs de charges sont des ions et non des électrons. Nous rappelons que les ions présentent une mobilité inférieure à celle des électrons. Ainsi, la fréquence est limitée par le temps de réponse des batteries imposé par la mobilité des ions. La fréquence des phases avec le convertisseur selon l'invention est comprise entre 1Hz et 10kHz .

Le cycle de cet exemple de convertisseur selon l'invention est composé d'une séquence de 4 phases φ₁ φ₂ φ₃ et φ₄. Les moyens de contrôle gèrent le fonctionnement du convertisseur via la matrice de contrôle M1 composée pour chaque ligne par le vecteur de contrôle [nᵢₙ n₁₁ n₂₁ n₂₂] avec nᵢₙ le coefficient associé à la source de la tension d'entrée Vᵢₙ, n₁₁ le coefficient associé à la batterie B₁₁, n₂₁ le coefficient associé à la batterie B₂₁, et n₂₂ le coefficient associé à la batterie B₂₂. Pour chaque phase, chaque composante du vecteur de contrôle peut prendre une parmi les valeurs suivantes {1,0,-1} et pendant chaque phase la tension de sortie V_{OUT}= nᵢₙVᵢₙ+n₁₁V₁ +n₂₁V₂ +n₂₂V₂. Dans la matrice de contrôle M1, le passage d'une ligne à une autre correspond au passage d'une phase à une autre. La lecture de toutes les lignes de la matrice correspond à l'exécution d'un cycle entier et la lecture de la matrice reprend à la première ligne pour entamer un nouveau cycle identique.

Il est envisageable de faire fonctionner le convertisseur selon l'invention avec une succession de cycles comportant les mêmes phases tel que décrit précédemment mais dans un ordre différent d'un cycle à un autre.

La figure 3b illustre les cellules de commutations utilisées pour réaliser les connexions correspondantes à chaque vecteur de contrôle de la matrice M1. La cellule de commutation CCEᵢₙ est associée à la source de la tension d'entrée Vᵢₙ, la cellule de commutation CCE₁₁ est associée à la batterie B₁₁, la cellule de commutation CCE₂₁ est associée à la batterie B₂₁, la cellule de commutation CCE₂₂ est associée à la batterie B₂₂. Contrairement à l'architecture générale de la cellule de commutation présentée dans la figure 2b, les cellules de commutation pour cet exemple sont optimisées pour minimiser le nombre de commutateurs selon les configurations possibles de montage en série correspondant à chaque vecteur ligne de la matrice de contrôle M1. Pour faciliter la lecture des schémas, nous avons rajouté à côté de chaque commutateur la phase dans laquelle il est activé en exécutant le cycle décrit par la matrice M1.

On rappelle qu'à l'état initial chaque batterie Bᵢⱼ stocke la quantité de charges Q_{ij,opt} correspondant à V₁ ou V₂ selon le groupe de la batterie.

Pendant la phase φ₁, le vecteur de contrôle Y_{φ1}=[1 0 -1 0] est lu dans la matrice de contrôle M1. Les moyens de contrôle génèrent alors les signaux de contrôle pour tous les commutateurs de la matrice de commutation de manière à réaliser le montage en série représenté dans le schéma 41. Ainsi, pendant la phase φ₁, V_{OUT} = Vᵢₙ- V₂ = 4-3=1V en mesurant V_{OUT} entre les deux noeuds de sortie Vₒ⁺ et Vₒ⁻. Durant la phase φ_{1,} la source de tension d'entrée Vᵢₙ fournit la quantité de charge +q à la batterie B₂₁. La variation cumulée de la quantité de charge à la fin de la première phase est alors ΔQ_{B21}=+q pour la batterie B₂₁, ΔQ_{GEN}=-q pour la source de la tension d'entrée, et 0 pour les autres composants élémentaires.

Pendant la phase φ₂, le vecteur de contrôle V_{φ2}=[1 0 0-1] est lu dans la matrice de contrôle M1. Les moyens de contrôle génèrent alors les signaux de contrôle pour tous les commutateurs de la matrice de commutation de manière à réaliser le montage en série représenté dans le schéma 42. Ainsi, pendant la phase φ₂, V_{OUT} = Vᵢₙ - V₂ = 4-3=1V en mesurant V_{OUT} entre les deux noeuds de sortie Vₒ⁺ et Vₒ⁻. Durant la phase φ₂, la source de tension d'entrée Vᵢₙ fournit la quantité de charge +q à la batterie B₂₂. La variation cumulée de la quantité de charge à la fin de la deuxième phase est alors ΔQ_{B21}=+q pour la batterie B₂₁, ΔQ_{GEN}=-2q pour la source de la tension d'entrée, ΔQ_{B22}=+q pour la batterie B₂₂ et ΔQ_{B11}=0 pour la batterie B₁₁.

Pendant la phase φ₃, le vecteur de contrôle V_{φ3}=[0 -1 1 0] est lu dans la matrice de contrôle M1. Les moyens de contrôle génèrent alors les signaux de contrôle pour tous les commutateurs de la matrice de commutation de manière à réaliser le montage en série représenté dans le schéma 43. Ainsi, pendant la phase φ₃, V_{OUT} = V₂ - V₁ = 3-2=1V en mesurant V_{OUT} entre les deux noeuds de sortie Vₒ⁺ et Vₒ⁻. Durant la phase φ₃, la batterie B₂₁ fournit la quantité de charge +q à la batterie B₁₁. La variation cumulée de la quantité de charge à la fin de la troisième phase est alors ΔQ_{B21}=0 pour la batterie B₂₁, ΔQ_{GEN}=-2q pour la source de la tension d'entrée, ΔQ_{B22}=+q pour la batterie B₂₂ et ΔQ_{B11}=+q pour la batterie B₁₁.

Pendant la phase φ_{4,} le vecteur de contrôle V_{φ4}=[-1 1 0 0] est lu dans la matrice de contrôle M1. Les moyens de contrôle génèrent alors les signaux de contrôle pour tous les commutateurs de la matrice de commutation de manière à réaliser le montage en série représenté dans le schéma 43. Ainsi, pendant la phase φ₄, V_{OUT} = V₂ + V₁ - Vᵢₙ = 3+2-4=1V en mesurant V_{OUT} entre les deux noeuds de sortie Vₒ⁺ et Vₒ⁻. Durant la phase φ₄, la batterie B₂₂ fournit la quantité de charge +q à la la batterie B₁₁ qui fournit à son tour la quantité de charge +q à la source GEN de la tension d'entrée Vᵢₙ . La variation cumulée de la quantité de charge à la fin de la troisième phase est alors 0 pour la batterie B₂₁, -q pour la source de la tension d'entrée, 0 pour la batterie B₂₂ et 0 pour la batterie B₁₁.

Le tableau 1 décrit les variations cumulées de quantités de charges dans les différents composants élémentaires lors de l'exécution du cycle selon la matrice de contrôle M 1.

| Phase | t₀=0 | φ₁ | φ₂ | φ₃ | φ₄ |
|---|---|---|---|---|---|
| GEN (Vᵢₙ) | Qᵢₙ | Qᵢₙ-q | Qᵢₙ-2q | Qᵢₙ-2q | Qᵢₙ-q |
| B₁₁ | Q_{11,opt} | Q_{11,opt} | Q_{11,opt} | Q_{11,opt}+q | Q_{11,opt} |
| B₂₁ | Q_{21,opt} | Q_{21,opt}+q | Q_{21,opt}+q | Q_{21,opt} | Q_{21,opt} |
| B₂₂ | Q_{22,opt} | Q_{22,opt} | Q_{22,opt}+q | Q_{22,opt}+q | Q_{22,opt} |
| Vₒᵤₜ | n.a | 4-3=1V | 4-3=1V | 3-2= 1V | 3+2-4=1V |
| Qₒᵤₜ sur Vₒᵤₜ | 0 | q | 2q | 3q | 4q |

On vérifie via le tableau 1 que la somme des tensions des composants élémentaires mis en série est égale à la valeur de la tension de sortie prédéfinie. La quantité de charge dans chaque élément de stockage d'énergie au début d'un cycle est égale à la quantité de charge à la fin du cycle. Cela permet de stabiliser le système pour minimiser les variations de la tension aux bornes des batteries de manière à garder la tension de polarisation « DC » aux bornes de la batterie constante au cours des cycles et donc maximiser le rendement énergétique du convertisseur. Il est envisageable avec le cycle selon l'invention de limiter les variations ΔV_{BAT} à des amplitudes inférieure à 10mV avec des fréquences de cycles comprise entre 1Hz et 10kHz.

De plus, on vérifie dans l'exemple de la matrice de commande M1 que les noeuds de sortie sont toujours connectés, à chaque phase, à au moins une batterie active se chargeant ou se déchargeant de q charges. D'ailleurs, on vérifie que pendant un cycle, le noeud de sortie Vₒᵤₜ a reçu une quantité de charge égale à Qₒᵤₜ= +4q et la source GEN de la tension d'entrée Vᵢₙ a fourni une quantité d'énergie +q. Ainsi l'énergie d'entrée du convertisseur vaut Eᵢₙ=4×Vᵢₙ×q, l'énergie de sortie du convertisseur Eₒᵤₜ=4×Vₒᵤₜ×4×q= 4×Vᵢₙ×q= Eᵢₙ. Ainsi, le rendement énergétique du convertisseur est égal à 1.

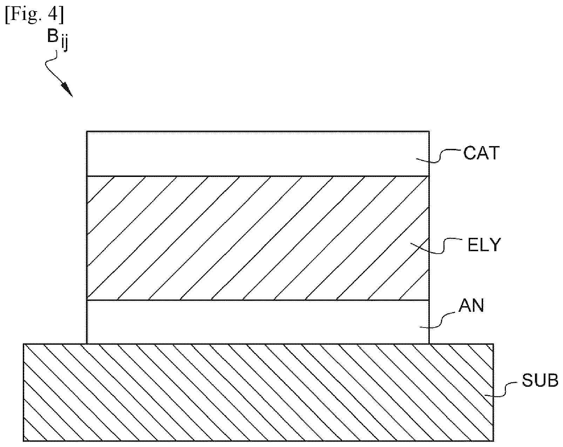

La figure 4 illustre un exemple d'une batterie à électrolyte solide compatible avec la réalisation du convertisseur selon l'invention dans un circuit intégré.

Les batteries à électrolyte solide (ou batterie tout solide, ou micro-batteries) présentent une nouvelle technologie de batteries en développement. Cette technologie est compatible avec un procédé de fabrication microélectronique. Ce type de micro-batterie présente des caractéristiques physiques de densité volumique, d'épaisseur et de taille unitaire permettant de trouver un compromis entre miniaturisation et efficacité énergétique.

Sans perte de généralité, une batterie à électrolyte solide est réalisée via un empilement de couches minces disposé sur un substrat SUB généralement en un matériau semiconducteur. L'empilement de couches minces comprend une électrode positive CAT en un matériau conducteur, une électrode négative AN en un matériau conducteur ; une couche d'électrolyte solide ELY inorganique disposée entre l'électrode positive et l'électrode négative.

Une telle structure est réalisable avec une succession d'étapes technologiques de fabrication établies pour l'industrie du semiconducteur tel que la gravure chimique, la gravure plasma, la pulvérisation et la lithographie.

Avec ce type de technologie, il est possible de réaliser des batteries qui présentent une surface comprise entre 100µm² et 5mm² pour une densité surfacique d'énergie allant de 1mAh/cm² à 10mAh/cm². A titre indicatif, à surface égale, l'équivalent d'une batterie présentant une densité énergétique de 1mAh/cm² est un condensateur présentant une capacité surfacique de 9mF/mm². Actuellement, les meilleures capacités surfaciques obtenues pour des condensateurs intégrables sur silicium sont de l'ordre de 1µF/mm². L'utilisation des batteries à électrolytes solide dans le convertisseur intégré sur semiconducteur permet ainsi de multiplier la densité énergétique des éléments de stockage par un facteur de 9000 comparé à l'utilisation des condensateurs à surface égale ( et/ou volume égal) .

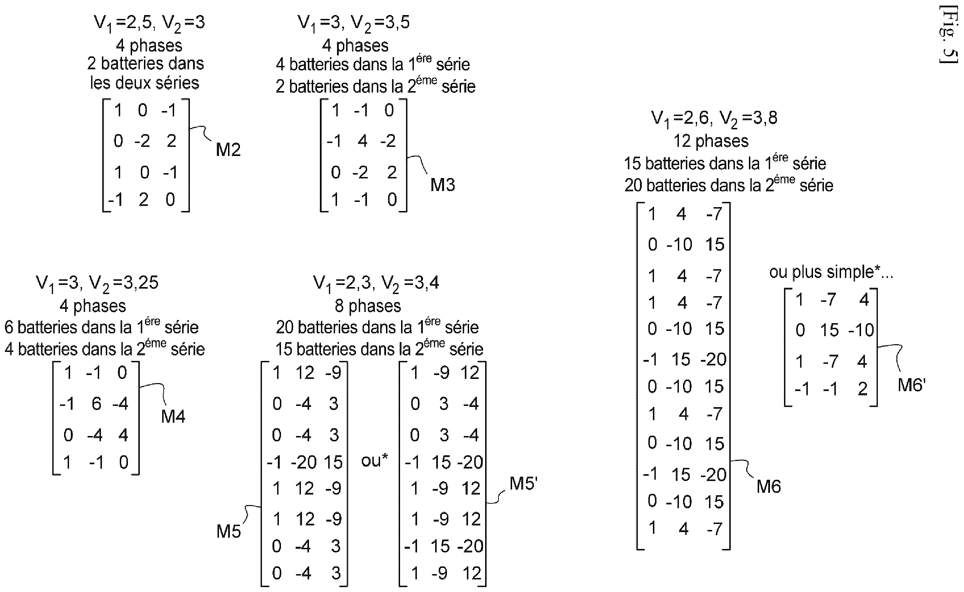

La figure 5 illustre plusieurs exemples de matrices de commande de convertisseur selon l'invention réalisables avec des micro-batteries intégrables dans des circuits intégrés. Il est à remarquer que le nombre de phases peut être grand (>10) et que la mise en série de batteries à chaque phase aussi (>10). Pour simplifier l'implémentation du circuit et améliorer le rendement énergétique, il est préférable de réduire le nombre de batteries et leurs mises en série. Dans cette figure la notation matricielle [nᵢₙ n₁ n₂] correspond à chaque série de batterie, la connexion individuelle de chaque batterie n'est pas renseignée pour simplifier la présentation. Le nombre de colonnes correspond au nombre de groupes de batterie et non au nombre de batteries comme donnés. Pour chaque vecteur de contrôle, un coefficient correspond au nombre de batteries du groupe associé mis en série pendant la configuration choisie.

Le convertisseur commandé par la matrice de contrôle M2 est réalisé avec deux groupes de batteries sous des polarisations respectives de V₁=2,5V, V₂=3V afin de générer une tension de sortie V_{OUT}=1V à partir d'une tension d'entrée de V_{IN}=4V. Il s'agit alors d'un convertisseur de tension continue avec un rapport de conversion de 1/4. Deux groupes de batteries sont utilisés : un premier groupe G₁(V₁)={B₁₁ B₁₂} composé de deux batteries B₁₁ B₂₁, sous une tension de polarisation optimale V₁=2V et un second groupe G₂(V₂)={B₂₁ B₂₂} composé de deux batteries B₂₁ B₂₂ chacune sous une tension de polarisation optimale V₂=3V. Le cycle de cet exemple de est composé d'une séquence de 4 phases φ₁ φ₂ φ₃ et φ₄. L'arrangement de la séquence des différentes phases est réalisé de manière à respecter les quatre caractéristiques précédemment détaillées du cycle selon l'invention.

Le convertisseur commandé par la matrice de contrôle M3 est réalisé avec deux groupes de batteries sous des polarisations respectives de V₁=3V, V₂=3,5V afin de générer une tension de sortie V_{OUT}=1V à partir d'une tension d'entrée de V_{IN}=4V. Il s'agit alors d'un convertisseur de tension continue avec un rapport de conversion de 1/4. Deux groupes de batteries sont utilisés : un premier groupe G₁(V₁)={B₁₁ B₁₂ B₁₃ B₁₄} composé de quatre batteries B₁₁ B₂₁, B₁₃ et B₁₄ sous une tension de polarisation optimale V₁=2V et un second groupe G₂(V₂)={B₂₁ B₂₂} composé de deux batteries B₂₁ B₂₂, chacune sous une tension de polarisation optimale V₂=3V. Le cycle de cet exemple de est composé d'une séquence de 4 phases φ₁ φ₂ φ₃ et φ₄. L'arrangement de la séquence des différentes phases est réalisé de manière à respecter les quatre caractéristiques précédemment détaillées du cycle selon l'invention.

Le convertisseur commandé par la matrice de contrôle M4 est réalisé avec deux groupes de batteries sous des polarisations respectives de V₁=3V, V₂=3,25V afin de générer une tension de sortie V_{OUT}=1V à partir d'une tension d'entrée de V_{IN}=4V. Il s'agit alors d'un convertisseur de tension continue avec un rapport de conversion de 1/4. Deux groupes de batteries sont utilisés : un premier groupe G₁(V₁)={B₁₁ B₁₂ B₁₃ B₁₄ B₁₅ B₁₆} composé de six batteries B₁₁ B₂₁, B₁₃, B₁₄, B₁₅ et B₁₆ sous une tension de polarisation optimale V₁=2V et un second groupe G₂(V₂)={B₂₁ B₂₂ B₂₃ B₂₄} composé de quatre batteries B₂₁ B₂₂, B₂₃ B₂₄ chacune sous une tension de polarisation optimale V₂=3V. Le cycle de cet exemple est composé d'une séquence de 4 phases φ₁ φ₂ φ₃ et φ₄. L'arrangement de la séquence des différentes phases est réalisé de manière à respecter les quatre caractéristiques précédemment détaillés du cycle selon l'invention.

D'autres combinaisons sont possibles à implémenter selon les tensions de polarisation optimales de micro-batteries utilisées. Nous avons décrit des exemples avec deux groupes de batteries mais il est possible de réaliser le convertisseur selon l'invention avec une pluralité de groupes de batteries. Plus généralement, il est possible de réduire le nombre de phases, en utilisant des tensions de polarisation Vi suffisamment différentes pour chaque groupe de batteries. Cela permet d'obtenir des cycles plus courts et donc la possibilité d'augmenter la fréquence de cycle de conversion.

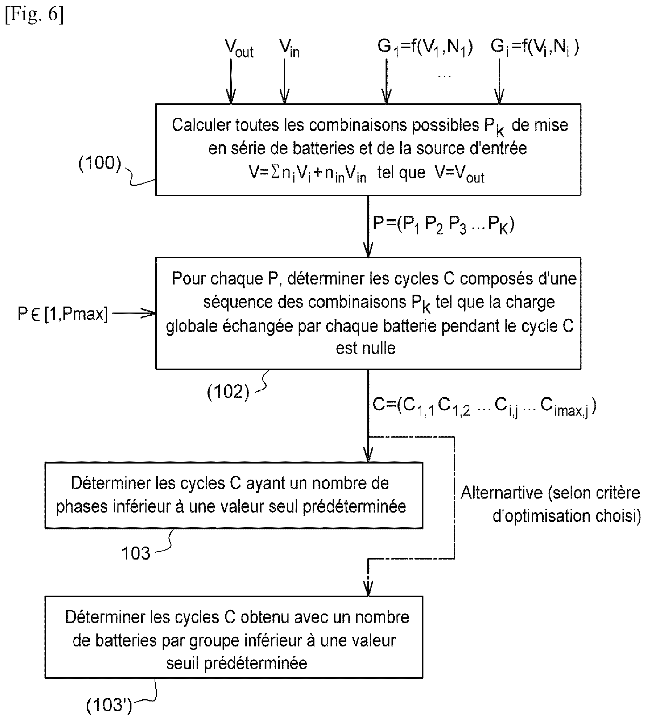

La figure 6 illustre un procédé permettant d'obtenir des combinaisons d'implémentation selon l'invention pour une tension d'entrée Vᵢₙ donnée, une tension de sortie Vₒᵤₜ donnée, et une pluralité de groupes de batteries G₁(V₁, N₁) à Gᵢ(Vᵢ Nᵢ) définis par le nombre de batteries Nᵢ et la tension de polarisation V_{i.} Les tensions de polarisation Vᵢ sont choisies de manière à se situer dans le plateau de tension indiqué dans la figure 1b.

La première étape 101 consiste en la détermination et le calcul de toutes les combinaisons possibles Pₖ de mise en série de batteries et de la source d'entrée V=ΣnᵢVᵢ+nᵢₙVᵢₙ tel que V=Vₒᵤₜ. Cela assure l'obtention de la valeur de tension de sortie cible en sortie aux combinaisons de mise en série Pₖ. ainsi, pour chaque phase le circuit est monté selon une combinaison Pₖ permettant de réaliser la fonction principale de conversion.

La deuxième étape 102 est réalisée pour chaque nombre de phases p, entier choisi entre 1 et pₘₐₓ. La deuxième étape 102 consiste en la détermination des cycles C composés d'une séquence des combinaisons Pₖ obtenue à l'étape 101 de manière que la charge globale échangée par chaque batterie pendant le cycle C est nulle. Cela assure le respect du critère « cycle fermé » par les cycles retenus à l'issu de l'étape102.

La dernière étape 103 ou 103' est une étape d'optimisation dépendant d'un critère d'optimisation prédéterminé selon les spécifications du système. Si le critère choisi est la minimisation du nombre de phases Pₖ pour un cycle C, l'étape 103 est exécutée en déterminant les cycles C ayant un nombre de phases inférieur à une valeur seuil prédéterminée. L'avantage de cette optimisation est la réduction du nombre de commutations pour les éléments de stockages d'énergie de manière à minimiser les pertes d'énergie par commutation. Si le critère d'optimisation choisi est la minimisation du nombre de batteries par groupe, l'étape 103' est exécutée en déterminant les cycles C obtenus par les étapes précédentes pour des nombres de batteries inférieurs à une valeur seuil prédéterminée. L'avantage de cette optimisation est la réduction de la surface occupée par le dispositif de conversion permettant d'améliorer les possibilités d'intégration du dispositif dans des circuits semiconducteurs.

## Revendications

1. Dispositif de conversion d'une tension continue d'entrée (Vᵢₙ) en une tension continue de sortie (Vₒᵤₜ) ayant une valeur prédéterminée comprenant :
∘ Un ensemble de composants élémentaires comprenant :
- Une source de tension (Gᵢₙ) pour générer la tension continue d'entrée (Vᵢₙ) ;
- deux noeuds de sortie (Vₒᵤₜ₊ ,Vₒᵤₜ₋);
- une pluralité d'éléments de stockage d'énergie (B_{i,j}), chacun étant constitué d'une batterie ou d'une pluralité de batteries montées en série ou en parallèle,
le dispositif de conversion étant **caractérisé en ce qu'**il comprend:
∘ une matrice de commutation (MC), configurée pour connecter les composants élémentaires entre eux selon un cycle périodique composé d'une pluralité de phases ;
chaque phase est associée à une configuration de connexion différente choisie de manière que :
- dans chaque élément de stockage d'énergie, la quantité de charge au début du cycle est égale à la quantité de charge à la fin du cycle ;
- les deux noeuds de sortie (Vₒᵤₜ₊ ,Vₒᵤₜ₋) présentent une différence de potentiel égale à la valeur prédéterminée de la tension continue de sortie (Vₒᵤₜ) pendant toutes les phases.

2. Dispositif de conversion d'une tension continue d'entrée (Vᵢₙ) en une tension continue de sortie (Vₒᵤₜ) selon la revendication précédente dans lequel la tension aux bornes de chaque élément de stockage d'énergie est maintenue dans une plage de tension prédéterminée correspondant à un palier de tension lors de la variation de la quantité de charge dans l'élément de stockage d'énergie.

3. Dispositif de conversion d'une tension continue d'entrée (Vᵢₙ) en une tension continue de sortie (Vₒᵤₜ) selon l'une quelconque des revendications précédentes dans lequel la durée de chaque phase est définie de manière à ce que la variation relative de la quantité de charge dans l'élément de stockage d'énergie lors du passage d'une phase à la phase suivante est inférieure à une valeur prédéterminée.

4. Dispositif de conversion d'une tension continue d'entrée (Vᵢₙ) en une tension continue de sortie (Vₒᵤₜ) selon l'une quelconque des revendications précédentes dans lequel les noeuds de sortie (Vₒᵤₜ₊,Vₒᵤₜ₋) sont toujours connectés à au moins un élément de stockage d'énergie (B_{1,1}) pour chaque phase.

5. Dispositif de conversion d'une tension continue d'entrée (Vᵢₙ) en une tension continue de sortie (Vₒᵤₜ) selon l'une quelconque des revendications précédentes dans lequel la matrice de commutation (MC) est configurée de manière à ce que pour chaque phase :
- pour chaque configuration choisie, un nombre de composants élémentaires sont montés en série entre eux ;
- et la tension de sortie (Vₒᵤₜ) est égale à la somme des tensions aux bornes des composants élémentaires montés en série.

6. Dispositif de conversion d'une tension continue d'entrée (Vᵢₙ) en une tension continue de sortie (Vₒᵤₜ) selon l'une quelconque des revendications précédentes dans lequel :
o la matrice de commutation (MC) comprend une pluralité de cellules de commutation élémentaires (CEEᵢⱼ) ; chaque cellule de commutation élémentaire (CEEᵢⱼ) étant associée à un composant élémentaire et comprenant au moins deux commutateurs commandés ;
o chaque composant élémentaire présente deux bornes ; et pour chaque composant élémentaire :
- la première borne est connectée via l'au moins un premier commutateur commandé à au moins une borne quelconque choisie parmi celles des autres composants élémentaires ou l'un quelconque des noeuds de sortie (Vₒᵤₜ₊ ,Vₒᵤₜ₋);
- la seconde borne est connectée via l'au moins un second commutateur commandé à au moins une borne quelconque choisie parmi celles des autres composants élémentaires ou l'un quelconque des noeuds de sortie (Vₒᵤₜ₊ ,Vₒᵤₜ₋).

7. Dispositif de conversion d'une tension continue d'entrée (Vᵢₙ) en une tension continue de sortie (Vₒᵤₜ) selon la revendication précédente dans lequel les commutateurs commandés sont réalisés avec des transistors de type CMOS.

8. Dispositif de conversion d'une tension continue d'entrée (Vᵢₙ) en une tension continue de sortie (Vₒᵤₜ) selon l'une quelconque des revendications précédentes dans lequel les batteries sont des batteries à électrolyte solide.

9. Dispositif de conversion d'une tension continue d'entrée (Vᵢₙ) en une tension continue de sortie (Vₒᵤₜ) selon la revendication précédente dans lequel les batteries à électrolyte solide sont réalisées via un empilement de couches et comprenant :
- une électrode positive ;
- une électrode négative ;
- une couche d'électrolyte solide inorganique disposée entre l'électrode positive et l'électrode négative ;

10. Dispositif de conversion d'une tension continue d'entrée (Vᵢₙ) en une tension continue de sortie (Vₒᵤₜ) selon la revendication précédente dans lequel les batteries à électrolyte solide sont des micro-batteries de type lithium-ion.

11. Dispositif de conversion d'une tension continue d'entrée (Vᵢₙ) en une tension continue de sortie (Vₒᵤₜ) selon l'une quelconque des revendications précédentes dans lequel la variation de la tension aux bornes de chaque élément de stockage d'énergie est inférieure à 10mV.

12. Dispositif de conversion d'une tension continue d'entrée (Vᵢₙ) en une tension continue de sortie (Vₒᵤₜ) selon l'une quelconque des revendications précédentes dans lequel le cycle présente une fréquence comprise entre 1Hz et 10kHz.

13. Dispositif de conversion d'une tension continue d'entrée (Vᵢₙ) en une tension continue de sortie (Vₒᵤₜ) selon l'une quelconque des revendications précédentes comprenant en outre un circuit de contrôle de polarisation configuré pour réinitialiser la tension aux bornes de chaque élément de stockage d'énergie à une valeur correspondant à un optimum de densité énergétique après un nombre prédéterminé de répétitions dudit cycle.

## Patentansprüche

1. Vorrichtung zur Umwandlung einer Eingangsgleichspannung (Vᵢₙ) in eine Ausgangsgleichspannung (Vₒᵤₜ) mit einem vorbestimmten Wert, die Folgendes umfasst:
∘ einen Satz von elementaren Komponenten, der Folgendes umfasst:
- eine Spannungsquelle (Gᵢₙ) zum Erzeugen der Eingangsgleichspannung (Vᵢₙ);
- zwei Ausgangsknoten (Vₒᵤₜ₊, Vₒᵤₜ₋);
- eine Vielzahl von Energiespeicherelementen (B_{i,j}), von denen jedes aus einer Batterie oder einer Vielzahl von Batterien besteht, die in Reihe oder parallel geschaltet sind,
wobei die Umwandlungsvorrichtung **dadurch gekennzeichnet ist, dass** sie Folgendes umfasst:
∘ eine Schaltmatrix (MC), die zum Verbinden der elementaren Komponenten gemäß einem periodischen Zyklus miteinander konfiguriert ist, der aus einer Vielzahl von Phasen besteht,
wobei jede Phase mit einer unterschiedlichen Verbindungskonfiguration verbunden ist, die so gewählt ist, dass:
- in jedem Energiespeicherelement die Ladungsmenge am Anfang des Zyklus gleich der Ladungsmenge am Ende des Zyklus ist;
- die beiden Ausgangsknoten (Vₒᵤₜ₊, Vₒᵤₜ₋) während aller Phasen eine Potentialdifferenz aufweisen, die gleich dem vorbestimmten Wert der Ausgangsgleichspannung (Vₒᵤₜ) ist.

2. Vorrichtung zur Umwandlung einer Eingangsgleichspannung (Vᵢₙ) in eine Ausgangsgleichspannung (Vₒᵤₜ) nach dem vorhergehenden Anspruch, wobei die Spannung an den Anschlüssen jedes Energiespeicherelements in einem vorbestimmten Spannungsbereich gehalten wird, der einer Spannungsstufe beim Ändern der Ladungsmenge in dem Energiespeicherelement entspricht.

3. Vorrichtung zur Umwandlung einer Eingangsgleichspannung (Vᵢₙ) in eine Ausgangsgleichspannung (Vₒᵤₜ) nach einem der vorhergehenden Ansprüche, wobei die Dauer jeder Phase so definiert ist, dass die relative Änderung der Ladungsmenge in dem Energiespeicherelement beim Übergang von einer Phase zur nächsten Phase kleiner als ein vorbestimmter Wert ist.

4. Vorrichtung zur Umwandlung einer Eingangsgleichspannung (Vᵢₙ) in eine Ausgangsgleichspannung (Vₒᵤₜ) nach einem der vorhergehenden Ansprüche, wobei die Ausgangsknoten (Vₒᵤₜ₊, Vₒᵤₜ₋) für jede Phase immer mit mindestens einem Energiespeicherelement (B_{1,1}) verbunden sind.

5. Vorrichtung zur Umwandlung einer Eingangsgleichspannung (Vᵢₙ) in eine Ausgangsgleichspannung (Vₒᵤₜ) nach einem der vorhergehenden Ansprüche, wobei die Schaltmatrix (MC) so konfiguriert ist, dass für jede Phase:
- für jede gewählte Konfiguration eine Anzahl von elementaren Komponenten miteinander in Reihe geschaltet ist;
- und die Ausgangsspannung (Vₒᵤₜ) gleich der Summe der Spannungen an den Anschlüssen der in Reihe geschalteten elementaren Komponenten ist.

6. Vorrichtung zur Umwandlung einer Eingangsgleichspannung (Vᵢₙ) in eine Ausgangsgleichspannung (Vₒᵤₜ) nach einem der vorhergehenden Ansprüche, wobei:
o die Schaltmatrix (MC) eine Vielzahl von elementaren Schaltzellen (CEEᵢⱼ) umfasst; wobei jede elementare Schaltzelle (CEEᵢⱼ) mit einer elementaren Komponente assoziiert ist und mindestens zwei gesteuerte Schalter umfasst;
o jede elementare Komponente zwei Anschlüsse aufweist; und für jede elementare Komponente:
- der erste Anschluss über den mindestens einen ersten gesteuerten Schalter mit mindestens einem beliebigen Anschluss verbunden ist, der aus den Anschlüssen der anderen elementaren Komponenten oder einem beliebigen der Ausgangsknoten (Vₒᵤₜ₊, Vₒᵤₜ₋) ausgewählt ist;
- der zweite Anschluss über den mindestens einen zweiten gesteuerten Schalter mit mindestens einem beliebigen Anschluss verbunden ist, der aus denen der anderen elementaren Komponenten oder einem beliebigen der Ausgangsknoten (Vₒᵤₜ₊, Vₒᵤₜ₋) ausgewählt ist.

7. Vorrichtung zur Umwandlung einer Eingangsgleichspannung (Vᵢₙ) in eine Ausgangsgleichspannung (Vₒᵤₜ) nach dem vorhergehenden Anspruch, wobei die gesteuerten Schalter mit Transistoren vom CMOS-Typ realisiert sind.

8. Vorrichtung zur Umwandlung einer Eingangsgleichspannung (Vᵢₙ) in eine Ausgangsgleichspannung (Vₒᵤₜ) nach einem der vorhergehenden Ansprüche, wobei es sich bei den Batterien um Festelektrolytbatterien handelt.

9. Vorrichtung zur Umwandlung einer Eingangsgleichspannung (Vᵢₙ) in eine Ausgangsgleichspannung (Vₒᵤₜ) nach dem vorhergehenden Anspruch, wobei die Festelektrolytbatterien über einen Schichtstapel realisiert sind und Folgendes umfassen:
- eine positive Elektrode;
- eine negative Elektrode;
- eine Schicht aus anorganischem Festelektrolyt, die zwischen der positiven Elektrode und der negativen Elektrode angeordnet ist.

10. Vorrichtung zur Umwandlung einer Eingangsgleichspannung (Vᵢₙ) in eine Ausgangsgleichspannung (Vₒᵤₜ) nach dem vorhergehenden Anspruch, wobei die Festelektrolytbatterien Mikrobatterien vom Lithium-Ionen-Typ sind.

11. Vorrichtung zur Umwandlung einer Eingangsgleichspannung (Vᵢₙ) in eine Ausgangsgleichspannung (Vₒᵤₜ) nach einem der vorhergehenden Ansprüche, wobei die Änderung der Spannung an den Anschlüssen jedes Energiespeicherelements weniger als 10 mV beträgt.

12. Vorrichtung zur Umwandlung einer Eingangsgleichspannung (Vᵢₙ) in eine Ausgangsgleichspannung (Vₒᵤₜ) nach einem der vorhergehenden Ansprüche, wobei der Zyklus eine Frequenz zwischen 1 Hz und 10 kHz aufweist.

13. Vorrichtung zur Umwandlung einer Eingangsgleichspannung (Vᵢₙ) in eine Ausgangsgleichspannung (Vₒᵤₜ) nach einem der vorhergehenden Ansprüche, die ferner eine Vorspannungssteuerschaltung umfasst, die zum Zurücksetzen der Spannung an den Anschlüssen jedes Energiespeicherelements nach einer vorbestimmten Anzahl von Wiederholungen des Zyklus auf einen Wert konfiguriert ist, der einem Optimum der Energiedichte entspricht.

## Claims

1. A device for converting an input direct voltage (Vᵢₙ) into an output direct voltage (Vₒᵤₜ) having a predetermined value, comprising:
o a set of elementary components comprising:
- a voltage source (Gᵢₙ) for generating the input direct voltage (Vᵢₙ);
- two output nodes (Vₒᵤₜ₊, Vₒᵤₜ₋);
- a plurality of energy-storing elements (B_{i,j}), each consisting of one battery or of a plurality of batteries connected in series or in parallel,
the converting device being **characterised in that** it comprises:
∘ a switching matrix (MC), configured to connect the elementary components to one another in a periodic cycle composed of a plurality of phases;
each phase being associated with a different connection configuration chosen such that:
- in each energy-storage element, the amount of charge at the start of the cycle is equal to the amount of charge at the end of the cycle;
- the two output nodes (Vₒᵤₜ₊, Vₒᵤₜ₋) have a potential difference equal to the predetermined value of the output direct voltage (Vₒᵤₜ) during all the phases.

2. The device for converting an input direct voltage (Vᵢₙ) into an output direct voltage (Vₒᵤₜ) according to the preceding claim, wherein the voltage across the terminals of each energy-storing element is kept in a predetermined voltage range corresponding to a voltage level during the variation in the amount of charge in the energy-storing element.

3. The device for converting an input direct voltage (Vᵢₙ) into an output direct voltage (Vₒᵤₜ) according to any one of the preceding claims, wherein the duration of each phase is defined such that the relative variation in the amount of charge in the energy-storing element during the transition from one phase to the next is lower than a predetermined value.

4. The device for converting an input direct voltage (Vᵢₙ) into an output direct voltage (Vₒᵤₜ) according to any one of the preceding claims, wherein the output nodes (Vₒᵤₜ₊, Vₒᵤₜ₋) are always connected to at least one energy-storing element (B_{1,1}) for each phase.

5. The device for converting an input direct voltage (Vᵢₙ) into an output direct voltage (Vₒᵤₜ) according to any one of the preceding claims, wherein the switching matrix (MC) is configured such that, for each phase:
- for each chosen configuration, a number of elementary components are connected in series with one another;
- and the output voltage (Vₒᵤₜ) is equal to the sum of the voltages across the terminals of the series-connected elementary components.

6. The device for converting an input direct voltage (Vᵢₙ) into an output direct voltage (Vₒᵤₜ) according to any one of the preceding claims, wherein:
∘ the switching matrix (MC) comprises a plurality of elementary switching cells (CEEᵢⱼ), each elementary switching cell (CEEᵢⱼ) being associated with one elementary component and comprising at least two controlled switches;
∘ each elementary component has two terminals, and for each elementary component:
- the first terminal is connected, via the at least one first controlled switch, to any at least any one terminal chosen from the terminals of the other elementary components or any one of the output nodes (Vₒᵤₜ₊, Vₒᵤₜ₋);
- the second terminal is connected, via the at least one second controlled switch, to any at least any one terminal chosen from the terminals of the other elementary components or any one of the output nodes (Vₒᵤₜ₊, Vₒᵤₜ₋).

7. The device for converting an input direct voltage (Vᵢₙ) into an output direct voltage (Vₒᵤₜ) according to the preceding claim, wherein the controlled switches are produced with CMOS transistors.

8. The device for converting an input direct voltage (Vᵢₙ) into an output direct voltage (Vₒᵤₜ) according to any one of the preceding claims, wherein the batteries are solid-state batteries.

9. The device for converting an input direct voltage (Vᵢₙ) into an output direct voltage (Vₒᵤₜ) according to the preceding claim, wherein the solid-state batteries are produced by stacking layers and comprise:
- a positive electrode;
- a negative electrode;
- an inorganic solid electrolyte layer placed between the positive electrode and the negative electrode.

10. The device for converting an input direct voltage (Vᵢₙ) into an output direct voltage (Vₒᵤₜ) according to the preceding claim, wherein the solid-state batteries are lithium-ion microbatteries.

11. The device for converting an input direct voltage (Vᵢₙ) into an output direct voltage (Vₒᵤₜ) according to any one of the preceding claims, wherein the variation in the voltage across the terminals of each energy-storing element is smaller than 10 mV.

12. The device for converting an input direct voltage (Vᵢₙ) into an output direct voltage (Vₒᵤₜ) according to any one of the preceding claims, wherein the cycle has a frequency comprised between 1 Hz and 10 kHz.

13. The device for converting an input direct voltage (Vᵢₙ) into an output direct voltage (Vₒᵤₜ) according to any one of the preceding claims, further comprising a circuit for controlling bias configured to reset the voltage across the terminals of each energy-storing element to a value corresponding to an optimum energy density after a predetermined number of repetitions of said cycle.
